# EUROPEAN PATENT APPLICATION

(11) **EP 4 299 248 A1**
(43) Date of publication of application: **03.01.2024**
(21) Application number: 22181295.1
(22) Date of filing: 27.06.2022
(51) Int. Cl.: B25B 23/00

(54) **NUT RETAINER TOOL**

(71) Applicant: Siemens Gamesa Renewable Energy A/S, 7330 Brande (DK)
(72) Inventor: Mahanama Hettige, Chathuranga, Orlando, FL, 32826 (US); Yu, Nan, Oviedo, FL, 32766 (US)
(74) Representative: SGRE-Association

(57) **Abstract**

Tool for retaining multiple nuts (17, 18, 19) while tightening a respective bolt (14, 15, 16) that is inserted along a respective axial axis (28, 29, 30) into the respective nut (17, 18, 19), in particular during the construction of a wind turbine (1), wherein the tool (20) comprises at least two or at least three retaining components (21, 22, 23), wherein each retaining component (21, 22, 23) is designed to retain a respective nut (17, 18, 19) and has at least two support faces (31-35), wherein each support face (31-35) is designed to support a respective circumferential face (39, 40) of the respective nut (17, 18, 19) that is to be retained by the respective retaining component (21, 22, 23) to limit a rotation of the respective nut (17, 18, 19) around the axial axis (28, 29, 30), wherein each retaining component (21, 22, 23) is locked in a fixed relative position and orientation to at least one neighboring retaining component (21, 22, 30) when at least one locking component (24-27) is in a locking state, wherein the locking component (24-27) can be moved from the locking state or removed from the tool (20) to allow for a relative movement, in particular a pivoting, of at least one pair of the retaining components (21, 22, 23).

## Description

The invention concerns a tool for retaining multiple nuts while tightening a respective bolt that is inserted along a respective axial axis into the respective nut, in particular during the construction of a wind turbine. Additionally, the invention concerns a fixation system, a wind turbine and a method for connecting a first component to a second component.

When connecting components via a nut and the bolt connection, it is necessary to secure the respective nut against rotation while the bolt is tightened. This can, e.g., be achieved by providing a nut-shaped recess in one of the components. In many applications, the milling of a recess for each nut is however to elaborate and costly to implement. Therefore, it is typically necessary to individually and sequentially secure each respective nut using a wrench or a similar tool while the respective bolt is tightened.

This approach is however very elaborate and requires the connection to be accessed from both ends by personnel multiple times when multiple bolts are fixed. This can be disadvantageous, since, e.g., an access to the interior of a hub that is to be fixed to the rotor shaft of a wind turbine can be elaborate and requires complex measures for securing the hub to ensure safe working conditions for personnel entering the hub when it is required that personnel enter the hub prior to fixing the hub to the shaft.

The problem to be solved is therefore to provide an improved approach for tightening bolts when multiple nuts are used, in particular during the construction of a wind turbine.

The problem is solved by the initially discussed tool, wherein the tool comprises at least two or at least three retaining components, in particular exactly two or exactly three retaining components. Each retaining component is designed to retain a respective nut and has at least two support faces. Each support face is designed to support a respective circumferential face of the respective nut that is to be retained by the respective retaining component to limit a rotation of the respective nut around the axial axis. Each retaining component is locked in a fixed relative position and orientation to at least one neighboring retaining component when at least one locking component is in a locking state. The locking component can be moved from the locking state or removed from the tool to allow for a relative movement, in particular a pivoting, of at least one pair of the retaining components.

When the locking component is in the locking state, a rotation of a first nut, whose circumferential faces are supported by support faces of a first retaining components would necessitate the rotation of the first retaining component and therefore, since a neighboring second retaining component is in a fixed relative position and orientation to the first retaining component, a pivoting and therefore a combined movement and rotation of the second retaining component. When the second retaining component is used to retain a second nut, that is, e.g., held in position by being loosely connected to a bolt, the second nut can block the pivoting of the second retaining component and therefore the rotation of the first retaining component and therefore the rotation of the first nut and vice versa. Therefore, the rotation of the first and second nut is blocked by the tool.

Therefore, when the retaining components are held in fixed positions and orientations with respect to each other, a rotation of each of the nuts retained by the tool around the respective axial axis can be blocked by using the tool. Therefore, all the nuts and the tool can be arranged in a single preparatory step and then all bolts can be tightened without the need for intermediary steps to retain individual nuts.

Due to the previously discussed working principle of the tool, a tightening of the bolts can lead to an internal stress and therefore notable forces between pairs of a respective support face of the tool and a respective circumferential face of a nut supported by this support face. These forces can lead to a rather high friction between the respective support face and the respective circumferential face, making it hard or even impossible to remove the tool from the nuts once the bolts are tightened, while the locking component is in the locking state.

Moving the locking component from the locking state, e.g., loosening a screw used as locking component, or removing the locking component from the tool allows for a relative movement between the different retaining components that can essentially completely remove the previously discussed stress and therefore the friction forces holding the tool in place once the bolts are tightened. The use of multiple retaining components, whose relative position and orientation can be fixed by a locking component, therefore ensures that the tool can be easily and reliably removed from the nuts once the bolts are tightened. It was found that the use of a tool made from one piece to retain multiple nuts leads to a notably more elaborate removal and can even necessitate to leave the tool in place once the bolts are tightened, therefore increasing the costs and weight of the assembled device.

The suggested tool therefore combines a robust retention of multiple nuts against rotation when tightening bolts with an easy removal of the tool once the tightening is finished.

The respective support faces of the respective retaining component can be formed by the edges of a through hole or recess of the respective retaining component. The retaining component can, e.g., be formed by a plate, e.g., by a metal plate, wherein the through hole or recess can, e.g., be formed by stamping. It would however also, e.g., be possible to form the respective retaining component by molding, e.g., from plastic, especially from reinforced plastic.

The respective nut and especially the bolt can extend through the through hole or recess when the tool is used. When a through hole is used to retain the nut, it is especially possible that all the circumferential faces of the nut are supported by the tool. It can however be advantageous to have one or more free lying circumferential faces of the respective nut when the tool is used, e.g., by using a recess and an especially plate-like retaining component that is designed to receive only part of the respective nut.

The use of a through hole or recess especially allows for providing support faces supporting outer circumferential faces of the respective nut, e.g., all or at least some of the faces of a hexagonal nut.

Alternatively, it is possible that the respective support faces of the respective retaining component are formed by the edges of a protrusion of the respective retaining component that extends in the direction of the respective axial axis. It is, e.g., possible to provide a protrusion in the form of a hex key to retain a nut with a hexagon socket. The hexagon socket and the hexagon nut discussed above are only cited as exemplary geometries. It is obviously also possible to support nuts with a larger or smaller number of circumferential faces.

Preferably, adjacent support faces are arranged at an angle to each other, wherein each pair of adjacent support faces encloses the same angle. Additionally or alternatively, the respective retaining component can comprise at least three or at least four or at least five support faces. It was found that the described geometries are especially suitable to support common types of nuts.

The respective support face can be spanned
by a first direction that is parallel to the direction of the respective axial axis and/or that extends at an angle of less than 20° or less than 10° to that direction and a second direction that is orthogonal to a respective straight line that is orthogonal to the respective axial axis and that intersects the respective axial axis or that extends at an angle of less than 20° or less than 10° to that line. The described geometry of the support faces on the one hand allows for a robust support of circumferential faces of the nut that are essentially parallel to the axial axis. On the other hand, this geometry allows for an easy axial insertion of the respective nut in the respective retaining component or vice versa in the axial direction and an easy removal of the tool or the individual retaining component by pulling it from the nut in the direction of the axial axis.

When each retaining component is locked in a fixed relative position and orientation to at least one neighboring retaining component by the at least one locking component being in a locking state, the axial axes of the retaining components can be arranged in parallel or at an angle of less than 5° or less than 10° with respect to each other. In this case the tool can especially be removed once the bolts are tightened by pulling the complete tool or the individual retaining component in the direction of the axial axes and therefore the tool can be removed without completely disconnecting the retaining components from each other.

The neighboring retaining components can be connected by at least one or exactly two locking components to lock them in a fixed relative position and orientation to each other when these locking components are in the locking state.

It is possible that the neighboring retaining components can be completely separated by removing or unlocking the at least one locking component. It is however also possible that the neighboring retaining components are connected by an articulated joint that limits a relative movement of the neighboring retaining component, even when the locking components are moved to an unlocked state or completely removed from the retaining component.

The respective locking component can be or comprise a screw, wherein in the locking state the respective locking component passes through a through hole or a recess in a first one of a pair of neighboring retaining components and
engages with a screw thread of the second one of these neighboring retaining components.

Such an arrangement is a relatively simple and cost-effective way to robustly fix the relative position orientation of the retaining components with respect to each other when the locking components are in the locking state, namely when the screws are tightened, especially when at least two locking components are fed through respective through holes of one of the neighboring retaining components and engage with respective screw threads of the second one of these neighboring retaining components.

In the locking state a screw head of the respective screw or a washer arranged between the screw head and the first one of the neighboring retaining components can be pressed against the surface of this retaining component surrounding the through hole or recess, therefore robustly fixing the relative orientation and position of the neighboring retaining components, even when the dimensions of the through hole or recess exceed the diameter of the shaft of the screw in at least one direction, therefore allowing for a relative movement of the screw in the direction orthogonal to the axial axis while the screw is not yet tightened.

The through hole or recess through which the respective locking component passes is preferably not identical to the previously discussed through hole or recess that forms the support faces. Therefore, at least one of the retaining components can comprise a first through hole or recess to form the support faces and at least one, preferably multiple, through holes or recesses through which a respective locking component passes in the locking state.

Alternatively, it would be possible to have at least one of the locking components passing through the same through hole or recess that is also used to form the support faces. It would, e.g., be possible to provide slits extending from respective support faces for housing the locking components in the locking state.

The through hole or recess, through which the locking component passes in the locking state, can be slit-shaped, allowing for a movement of the screw shaft along the through hole or recess orthogonal to the axial axis when the screw is loosened.

As previously discussed, moving the locking component or components from the locking state or removing it or them from the tool primarily serves to reduce a stress in the tool and therefore the resulting forces between support faces and circumferential faces to allow for an effortless removal of the tool from the retained nuts. This effect can typically be achieved with a relatively small movement between the retaining components. Using a through hole or a recess that extends in at least one dimension beyond in the diameter of the screw shaft can be sufficient to allow for such a movement, when the respective screw is loosened and therefore the screw head or washer is no longer pressed against the surface of the retaining component having the through hole or recess. This removes the need to completely remove the screws, leading to an easier and faster handling of the tool when the tool is to be removed once the bolts are tightened.

The tool can comprise at least three of the retaining components, wherein at least two of the retaining components are identical. This can notably reduce the costs of the tools, since a lower number of different parts needs to be produced, especially when at least the identical retaining components are formed by stamping or molding.

In the previously discussed embodiment having screws as locking components, it is, e.g., possible to use two identical retaining components having through holes or recesses for the screws and connecting both of these retaining components to a third retaining component providing the screw holes for the screws. This arrangement can, e.g., be extended on either side by adding a further retaining component having screw holes, that is preferably identical to the other retaining component having screw holes.

The invention also concerns a fixation system comprising a tool according to the present invention and at least two or at least three nuts to be retained by the tool. The shape of the through hole or recess can especially match the outer shape of the nut or a section of this outer shape. Alternatively, a protrusion formed by the respective retaining component can have a shape in a plane orthogonal to the axial axis that matches the shape of a recess in the nut, e.g., forming a hex key.

It is however also possible that the shape of the protrusion, through hole or recess is notably different from the inner or outer circumference of the nut. An example is the use of two relatively short support faces supporting adjacent circumferential faces close to a respective corner of the outer circumference of the nut, while the inner surface of the through hole or recess is spaced apart from the nut in areas between the corners of the nut.

The invention also concerns a wind turbine comprising a fixation system according to the present invention, wherein the nuts of the fixation system and bolts held in these nuts connect two components of the wind turbine, wherein the nuts are retained by a respective one of the retaining components of the tool.

The wind turbine can especially be in a state of construction. It is, e.g., possible to remove the tool from the wind turbine at a later point in time. It is however also possible that the tool remains as part of the wind turbine during normal operation of the wind turbine.

Additionally, the invention concerns a method for connecting a first component to a second component, in particular during the construction of a wind turbine, by a nut and bolt connection, the model comprising the steps:
- arranging the first and second component in such a way that at least two respective through holes of the first and second component align,
- arranging at least two nuts and the tool according to the present invention at the first component in such a way that the opening of the respective nut aligns with the respective through hole of the first component, wherein the at least one locking component is in the locking state to retain the nuts in a respective orientation using the tool,
- passing a respective bolt for each nut through the respective through holes of the first and second component to insert it into the respective nut along a respective axial axis, and
- tightening the bolt while a rotation of the respective nut around the respective axial axis is limited by the tool.

As previously discussed with respect to the tool according to the present invention, the use of the tool allows multiple nuts to be retained at once with low effort.

It should be noted that the steps can be performed in the order given above, but that it is also possible to use the steps in a different order. It is especially possible to first arrange the nuts and the tool at the first component and then arrange the first and second component as discussed above. This, e.g., allows the nuts and tool to be arranged on the inside of a rotor hub, before the rotor hub is arranged next to a rotor shaft to connect these two components. This allows the nuts and the tool to be arranged in the hub, while the hub is still on the ground. Once the hub is hoisted next to the rotor shaft, the connection can therefore be completely performed from the rotor shaft side by inserting and tightening the bolts, without entering the hub. This is highly relevant, since it should typically not be allowed for personal to enter the hub once it is hoisted in position with respect to the rotor shaft before the hub is fixed to the rotor shaft without elaborate security precautions.

Alternatively, it would, e.g., also be possible to pass the bolts through the through holes of the first and second component, before the nuts and/or the tools are arranged at the first component.

In an advantageous embodiment the method comprises the additional steps of:
- moving the at least one locking component from the locking state or removing it from the tool to allow for a relative movement, in particular a pivoting, of at least one pair of the retaining components, and
- removing the retaining components from the respective nuts.

While it is in principle possible to leave the tool attached to the nuts, such that the tool, e.g., forms a permanent part of the constructed wind turbine, it can be advantageous for cost and weight reasons to remove and especially reuse the tool. As previously discussed, this can be problematic while the positions and orientations of the locking components with respect to each other are fixed. Therefore, the use of the discussed additional steps is advantageous.

The tool can be held at the first component using magnetic force, in particular using a magnet. This is especially advantageous when the tool and nuts are to be held in place for a while before inserting the bolts, e.g., when access to the nut side of the connection is problematic while the components are to be connected. An example of this problem was already discussed.

The method can be used to connect a hub of a wind turbine as the first component to a rotor shaft of the wind turbine as the second component. As previously discussed, access to the hub during the connection might be problematic in this case. Therefore, the use of the tool and the method according to the present invention are especially advantageous in this case.

Other objects and features of the present invention will become apparent from the following detailed description considered in conjunction with the accompanying drawings. The drawings, however, are only principal sketches designed solely for the purpose of illustration and do not limit the invention. The drawings show:
- Fig. 1: an exemplary embodiment of a wind turbine according to the present invention,
- Fig. 2: the hub of the wind turbine shown in fig. 1 during an intermediate step of the construction of the wind turbine, comprising an exemplary embodiment of a fixation system according to the present invention,
- Fig. 3: an enlarged view of the fixation system shown in fig. 2,
- Fig. 4: an exemplary embodiment of a tool according to the present invention, where the locking components are in a locking state,
- Fig. 5: the tool shown in fig. 4, wherein the locking components are removed from the retaining components of the tool, and
- Fig. 6: a flow chart of an exemplary embodiment of a method according to the present invention.

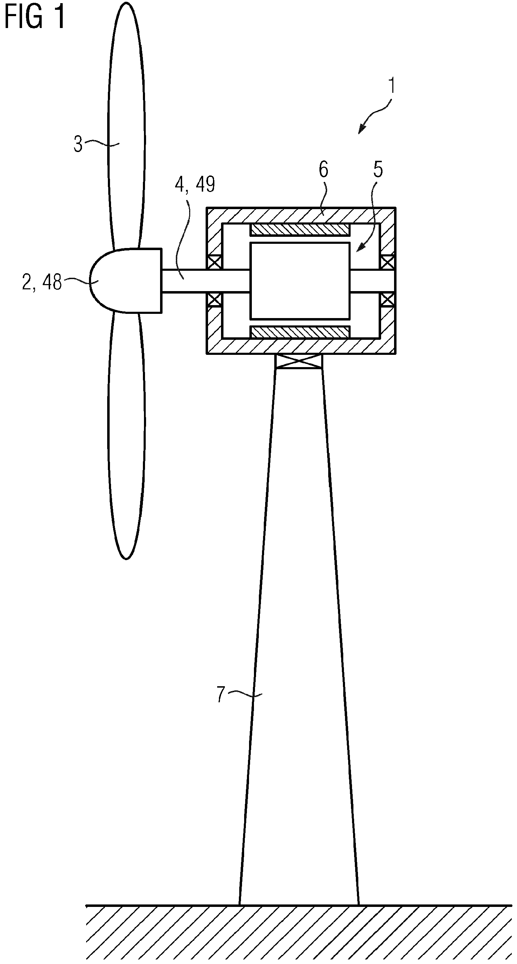

Fig. 1 shows a wind turbine 1 comprising a tower 7, a nacelle 6 housing a generator 5, and a rotor 3, wherein the hub 2 of the rotor is connected to a shaft 4 of the rotor using a nut and bolt connection.

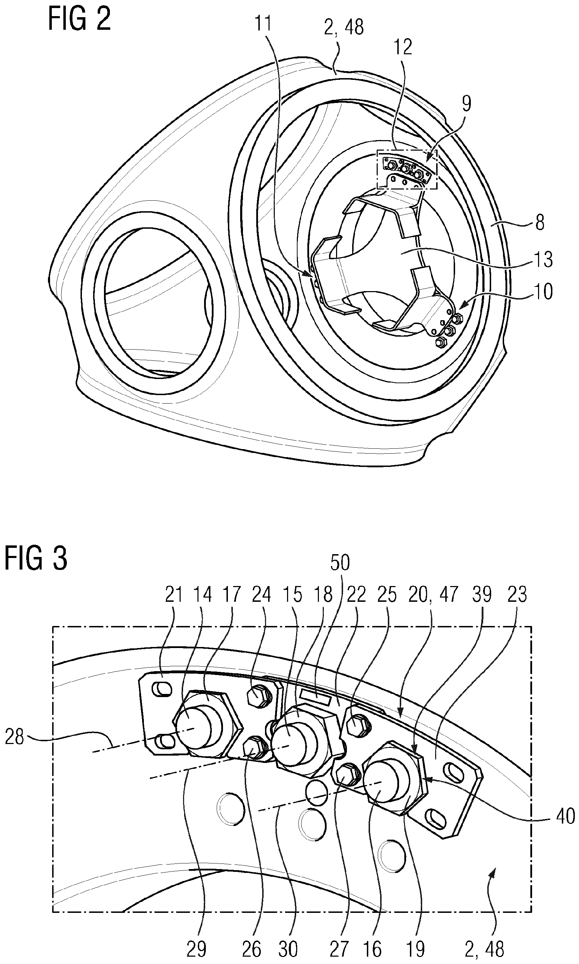

Fig. 2 shows an interior view of the hub 2 showing the three groups 9, 10, 11 of nut and bolt connections used to connect the hub 2 as a first component 48 to the shaft 4 as a second component 49. For reasons of simplicity and clarity, the shaft 4 itself, the rotor blades that are connected via the flanges 8 and the hub cap are not shown in fig. 2.

Fig. 2 shows an intermediate state of the assembly of the wind turbine 1, wherein the bolts of the nut and the bolt connections are already tightened and wherein a respective tool used for retaining the nuts is already removed from the groups 10 and 11 but still present in the group 9. The cover plate 13 is not yet attached to the hub.

A major challenge during the construction of the wind turbine 1 is the fact that the presence of personal inside the hub should typically be avoided for security reasons while the hub 2 is hoisted in the correct position to connect it with the shaft 4 and while the hub 2 is not yet secured to the shaft 4. This can be achieved by using a respective tool 20 to retain multiple nuts of the respective group 9, 10, 11 before the hub 2 is hoisted to the position shown in fig. 1 and then perform the connection from the side of the hub.

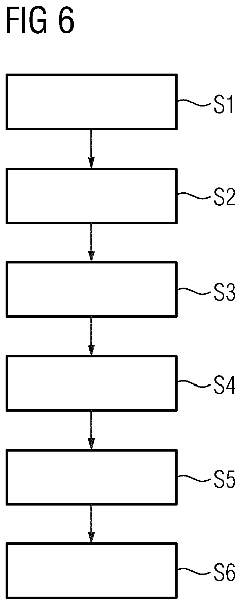

The retention of the nuts and the tool used for this purpose will now be discussed in detail with reference to figures 3 to 5 and the flow chart shown in fig. 6 for a method for connecting the components 48, 49.

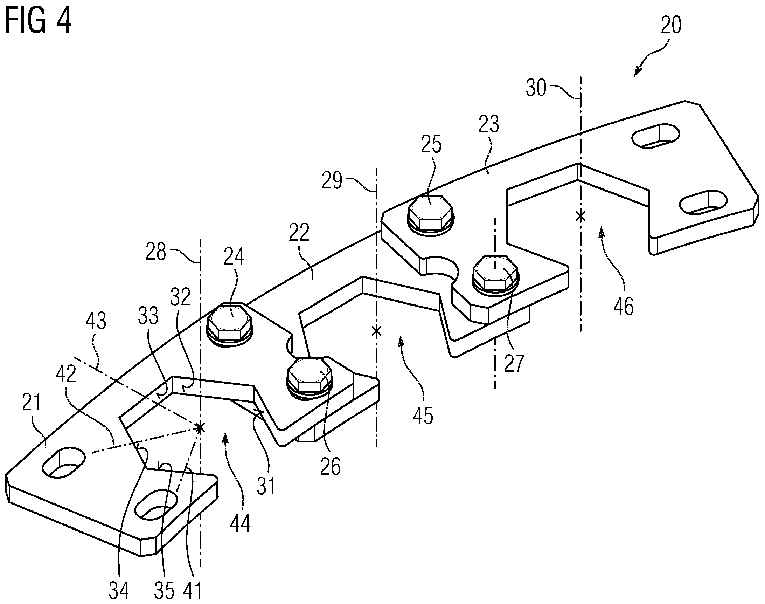

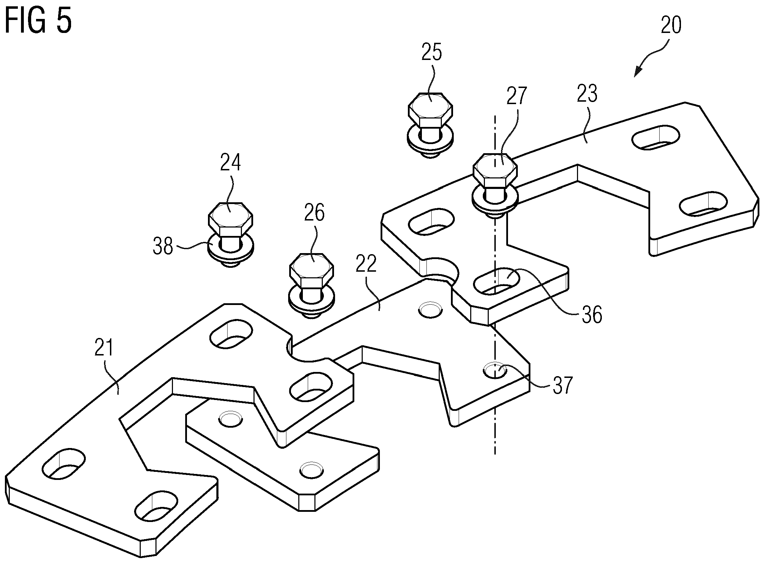

Fig. 3 shows an enlarged view of the area 12 in fig. 2 and shows the fixing system 47 comprising the nuts 17, 18, 19 and the tool 20 arranged on the component 48, fig. 4 shows a perspective view of the tool 20 and fig. 5 shows an exploded view of the tool 20, wherein the locking components 24-27, used to attach the three retaining components 21, 22, 23 of the tool 20 to each other, are removed from the retaining components 21, 22, 23.

In step S1 the nuts 17, 18, 19 and the tool 20 are arranged on the shown surface of the component 48 in such a way that the opening of the respective nut aligns with a respective through hole of the component 48, through which the bolts 14, 15, 16 shown in fig. 3 extend along a respective axial axis 28, 29, 30. As shown in fig. 4, the tool 20 comprises three retaining components 21, 22, 23 that are locked in a relative position and orientation to each other using locking components 24-27, that are formed by screws in the example.

Each of the retaining components has multiple support faces 31-35, that are designed to engage a respective circumferential face 39, 40 of a respective one of the nuts 17, 18, 19. When the tool 20 and nuts 17, 18, 19 are arranged as shown in fig. 3 and the bolts 14, 15, 16 are already loosely inserted into the nuts 17, 18, 19, a rotation of any one of the nuts 17, 18, 19 would only be possible when the whole tool 20 would rotate around the respective axial axis 28, 29, 30, which is however blocked by the bolts 14, 15, 16 inserted in the other nuts 17, 18, 19. In the arrangement shown in fig. 3 the bolts 14, 15, 16 can therefore be tightened while a rotation of the nuts 17, 18, 19 is blocked by the tool and the nuts are therefore retained by the tool 20.

In the shown example, the support faces 31-35 are formed by a recess of the respective component. Since the recess is open on one side, only five of the six circumferential faces of each of the nuts 17, 18, 19 are supported. It would even be sufficient to only support two or three of these circumferential faces 39, 40. It would also be possible, to use a through hole of the respective retaining component 21, 22, 23 instead of the recess 44, 45, 46, e.g., to support all circumferential faces 39, 40 of the respective nut 17, 18, 19 with a respective support face 31-35.

The example uses a support of outer circumferential faces of the respective nut. It would alternatively be possible to support inner circumferential faces, e.g., faces of a hexagon socket of a nut, using a protrusion of the respective retaining component 21, 22, 23.

Each respective support face is essentially parallel to the respective axial axis 28, 29, 30 and is approximately orthogonal to a respective straight line 41, 42, 43 that is orthogonal to the respective axial axis 28, 29, 30 and intersects the respective axial axis 28, 29, 30. This orientation of the support faces 31-35 allows for an easy insertion of the respective nut 17, 18, 19 in the respective retaining component 21, 22, 23 and allows for a relatively easy removal of the tool once on the bolts 14, 15, 16 are tightened.

Since the bolts 14, 15, 16 are not yet inserted into the nuts 17, 18, 19 in step S1, the fixation system 47 is preferably held in place by other means. This can, e.g., be achieved by using one or more magnets 50. While a use of the tool 20 is only shown for the group 9 in fig. 2 and 3, preferably each of the groups 9, 10, 11 as its respective fixation system 47 comprising the nuts 17, 18, 19 and a tool 20 arranged as discussed above during step S1.

In step S2 the first and the second component 48, 49 are arranged in such a way that the through holes, at which the nuts 17, 18, 19 and the nuts of the further groups 10, 11 are arranged, align with the respective through holes of the second component 49, that is formed by the shaft 4 in the example. For this purpose, the hub 2 can be hoisted in the position shown in fig. 1 with respect to the shaft 4.

In step S3 a respective bolt 14, 15, 16 for each nut 17, 18, 19 is inserted through the through holes of the first and second component 48, 49 to insert it into the respective nut along the respective axial axis 28, 29, 30.

In step S4 the bolts 14, 15, 16 are tightened, while a rotation of the respective nut 17, 18, 19 around the respective axial axis 28, 29, 30 is limited and essentially completely blocked by the tool 20, as discussed above.

Since the nuts 17, 18, 19 are retained by the tool 20 during the step S2 to S4, personal does not need to enter the hub 2 after the tool 20 and nuts 17, 18, 19 of the groups 9, 10, 11 are arranged in the hub, which can be performed on the ground, until the hub 2 is robustly fixed to the shaft 4 by tightening the bolts 17, 18, 19 of all groups 9, 10, 11. Therefore an access to the hub 2 is only necessary on the ground and after it is robustly fixed to the shaft.

While in principle it is possible to leave the respective tool 20 in place after tightening the bolt 14, 15, 16, it is advantageous for economic reasons and to reduce weight in the upper part of the wind turbine to remove the tools 20 from the nuts 17, 18, 19 of each group 10, 11, 12 after the assembly of the wind turbine 1. In the example the axial axis 28, 29, 30 are at least approximately parallel to each other, so that in principle the tool 20 could be pulled from the nuts 17, 18, 19 without any preparatory steps.

The tightening of the bolts 14, 15, 16 does however typically induce an internal stress in the tool 20 that can cause notably forces between pairs of a respective circumferential face 39, 40 and a respective support face 31-35 supporting that circumferential face 39, 40. Therefore, the removal of the tool 20 can be hindered by a rather large frictional force.

To reduce this friction and allow for a relatively easy removal of the tool 20 from the nuts 17, 18, 19, the tool 20 comprise multiple retaining components 21, 22, 23, that are only locked in a fixed relative position and orientation to each other when the locking components 24-27 are in a locking state. By removing the locking components 24-27 from the retaining components 21, 22, 23 or even by just loosening the screws forming these locking components 24-27 a relative movement between the retaining components 21, 22, 23 becomes possible and the internal stress and therefore the frictional forces for pulling the tool 20 or the individual retaining components 21, 22, 23 from nuts 17, 18, 19 can be strongly reduced allowing for an easy removal of these components.

Therefore, the locking components 24-27 are moved from the locking state shown in fig. 4 to an unlocked state by loosening the screws or even removing them completely from the tool in step S4 to allow for a relative movement, in particular a pivoting, of the retaining components 21, 22, 23 with respect to each other.

This allows for an easy removal of the retaining components 21, 22, 23 from the respective nuts 17, 18, 19 in step S6 as discussed above.

As shown in fig. 4 and 5, a connection of neighboring retaining components 21, 22, 23 is achieved by using two locking components 24-27 formed by screws and a respective washer 38. In the locking state shown in fig. 4, the respective locking component 24-27 passes through a through hole 36 in one of the retaining components 21, 23 and engages with the screw thread 37 of the central retaining component 22. When the screws forming the locking components 24-27 are sufficiently tightened, the retaining components 21, 23 are clamped between the upper surface of the retaining component 22 and the washers 38 or, if such washers are not present, the screw heads of the locking components 24-27. This clamping fixes the relative position and orientation of the retaining components 21, 23 with respect to the retaining component 22.

As shown in fig. 4 and 5, the retaining components 21, 23 can be identical. This can on the one hand reduce cost by reducing the number of different components used in the production of the tool 20. On the other hand, it allows for a retention of more than three nuts by extending the chain of the retaining components 21, 22, 23 by adding an additional retaining component that is identical to the retaining component 22 and that is connected with the free through holes of either one of the retaining components 21, 23 via further screws. Such a chain can obviously be extended to essentially arbitrary length.

A relatively movement of the retaining components 21 to 23 can be allowed for by completely removing the locking components 24-27, as shown in fig. 5. Such an approach would however require very careful unmounting of the tool 20, since it is rather easy to lose small parts such as the locking components 24-27.

It is therefore advantageous, if the through holes 36 are formed in such a way that a certain amount of relative movement, e.g., a slight pivoting and/or shifting, of the retaining components 21, 22, 23 with respect to each other is possible while the locking components 24-27 still engage the respective screw thread 37, by simply loosening the screws. This can, e.g., be achieved by using through holes 36 that are slit-shaped as shown in fig. 5.

Although the present invention has been described in detail with reference to the preferred embodiment, the present invention is not limited by the disclosed examples from which the skilled person is able to derive other variations without departing from the scope of the invention.

## Claims

1. Tool for retaining multiple nuts (17, 18, 19) while tightening respective nuts (17, 18, 19) to respective bolts (14, 15, 16), wherein the respective bolts (14, 15, 16) are inserted along a respective axial axis (28, 29, 30) into the respective nut (17, 18, 19), in particular during a construction process of a wind turbine (1), wherein the tool (20) comprises
at least two or at least three retaining components (21, 22, 23),
wherein each retaining component (21, 22, 23) is designed to retain a respective nut (17, 18, 19) and has at least two support faces (31-35),
wherein each support face (31-35) is designed to support a respective circumferential face (39, 40) of the respective nut (17, 18, 19) to be retained in order to limit a rotation of the respective nut (17, 18, 19) around the axial axis (28, 29, 30),
wherein each retaining component (21, 22, 23) is locked in a fixed relative position and orientation to at least one neighboring retaining component (21, 22, 30) when at least one locking component (24-27) is in a locking state,
wherein the locking component (24-27) can be moved from the locking state or removed from the tool (20) to allow for a relative movement, in particular a pivoting parallel to the respective axial axis (28, 29, 30), of at least one pair of the retaining components (21, 22, 23) .

2. Tool according to claim 1, wherein the respective support faces (31-35) of the respective retaining component (21, 22,23) are formed
by the edges of a through hole or recess (44, 45, 46) of the respective retaining component (21, 22, 23),
or by the edges of a protrusion of the respective retaining component (21, 22, 23) that extends in the direction of the respective axial axis (28, 29, 30).

3. Tool according to claim 1 or 2,
wherein the adjacent support faces (31-35) are inclined by an angle to each other, wherein the angle lies within a plane being perpendicular to the axial axis (28, 29, 30), wherein the angle of each pair of adjacent support faces (31-35) extends to the same amount, and/or wherein the respective retaining component (21, 22, 23) comprises three, four, five or at least five support faces (31-35).

4. Tool according to one of the preceding claims, wherein the respective support face (31-35) is spanned
by a first direction that is parallel to the direction of the respective axial axis (28, 29, 30) and/or that includes an angle of less than 20° or less than 10° with this direction and
a second direction that is orthogonal to a respective straight line (41, 42, 43) that is orthogonal to the respective axial axis (28, 29, 30) and that intersects the respective axial axis (28, 29, 30) or that includes an angle of less than 20° or less than 10° with this line.

5. Tool according to one of the preceding claims, wherein when each retaining component (21, 22, 23) is locked in a fixed relative position and orientation to at least one neighboring retaining component by the at least one locking component (24-27) being in a locking state, the axial axes (28, 29, 30) of the retaining components (21, 22, 23) are arranged in parallel or at an angle of less than 5° or less than 10° with respect to each other.

6. Tool according to one of the preceding claims, wherein neighboring retaining components (21, 22, 23) are connected by at least one or exactly two locking components (24-27) to lock them in a fixed relative position and orientation to each other when these locking components (24-27) are in the locking state.

7. Tool according to one of the preceding claims, wherein the respective locking component (24-27) is or comprises a screw,
wherein in the locking state the respective locking component (24-27) passes through a through hole (36) or a recess in a first one of a pair of neighboring retaining components (21, 22, 23) and
engages with a screw thread (37) of the second one of these neighboring retaining components (21, 22, 23).

8. Tool according to claim 7, wherein the through hole (36) or recess is slit shaped, allowing for a movement of the screw shaft along the hole (36) or recess orthogonal to the axial axis (28, 29, 30) when the screw is loosened.

9. Tool according to one of the preceding claims, wherein the tool (20) comprises at least three of the retaining components (21, 22, 23), wherein at least two of the retaining components (21, 22, 23) are identical.

10. Fixation system comprising a tool (20) according to one of the preceding claims, and at least two or at least three nuts (17, 18, 19) to be retained by the tool (20), and in particular at least two or at least three respective bolts (14, 15, 16),.

11. Wind turbine comprising a fixation system (47) according to claim 10,
wherein the nuts (17, 18, 19) of the fixation system (47) and bolts (14, 15, 16) held in these nuts (17, 18, 19) connect two components (48, 49) of the wind turbine (1), and
wherein the nuts (17, 18, 19) are retained by a respective one of the retaining components (21, 22, 23) of the tool (20).

12. Method for connecting a first component (48) to a second component (49), in particular during the construction of a wind turbine (1), by a nut and bolt connection, the method comprising the steps:
arranging the first and second component (48, 49) in such a way that at least two respective through holes of the first and second component (48, 49) align,
arranging at least two nuts (17, 18, 19) and the tool (20) according to one of the claims 1 to 9 at the first component (48) in such a way that the opening of the respective nut (17, 18, 19) aligns with the respective through hole of the first component (48), wherein the at least one locking component (24-27) is in the locking state to retain the nuts (17, 18, 19) in a respective orientation using the tool (20),
passing a respective bolt (14, 15, 16) for each nut (17, 18, 19) through the respective through hole of the first and second component (48, 49) to insert it into the respective nut (17, 18, 19) along a respective axial axis (28, 29, 30), and
tightening the bolt (14, 15, 16) while a rotation of the respective nut (17, 18, 19) around the respective axial axis (28, 29, 30) is limited by the tool (20).

13. Method according to claim 12, comprising the additional steps of:
moving the at least one locking component (24-27) from the locking state or removing it from the tool (20) to allow for a relative movement, in particular a pivoting, of at least one pair of the retaining components (21, 22, 23), and
removing the retaining components (21, 22, 23) from the respective nuts (17, 18, 19).

14. Method according to claim 12 or 13, wherein the tool (20) is held at the first component using magnetic force, in particular using a magnet (50).

15. Method according to one of the claims 12 to 14, wherein the method is used to connect a hub (2) of a wind turbine (1) as the first component (48) to a rotor shaft (4) of the wind turbine (1) as the second component (49).
